(19) Europäisches Patentamt
European Patent Office
Office européen des brevets

(11) **EP 3 683 563 B1**

(12) **EUROPEAN PATENT SPECIFICATION**

(45) Date of publication and mention
of the grant of the patent:
**08.03.2023 Bulletin 2023/10**

(21) Application number: **20152267.9**

(22) Date of filing: **16.01.2020**

(51) International Patent Classification (IPC):
***G01N 1/22*** *(2006.01)*

(52) Cooperative Patent Classification (CPC):
**G01N 1/2252;** G01N 2001/2255

(54) **DILUTION TUNNEL INTERNAL AQUEOUS CONDENSATION MONITORING SYSTEM AND METHOD FOR VEHICLE EMISSION TESTS**

SYSTEM UND VERFAHREN ZUR ÜBERWACHUNG DER INNEREN WÄSSRIGEN KONDENSATION IN EINEM VERDÜNNUNGSTUNNEL FÜR FAHRZEUGEMISSIONSTESTS

SYSTÈME ET PROCÉDÉ DE SURVEILLANCE DE CONDENSATION AQUEUSE INTERNE D'UN TUNNEL DE DILUTION POUR DES ESSAIS D'ÉMISSION DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2019 CN 201910047120**

(43) Date of publication of application:
**22.07.2020 Bulletin 2020/30**

(73) Proprietor: **Shanghai Volvo Car Research and Development Co.,
Ltd.
Shanghai 201821 (CN)**

(72) Inventors:
• **LEI, Jie
Shanghai 201815 (CN)**

• **SIMONSSON, Lasse
405 31 Göteborg (SE)**
• **BERG, Olle
405 31 Göteborg (SE)**

(74) Representative: **Kransell & Wennborg KB
P.O. Box 2096
403 12 Göteborg (SE)**

(56) References cited:
WO-A1-02/071030        CN-A- 107 870 222
JP-A- H0 949 787        US-A- 3 986 386
US-A- 5 469 731        US-A- 5 968 452
US-A1- 2004 200 265        US-A1- 2013 312 489
US-A1- 2014 290 336        US-A1- 2015 308 930
US-A1- 2016 209 300

## Description

## TECHNICAL FIELD

The present invention relates to the field of vehicle emission test, in particular to a vehicle emission test system.

## BACKGROUND

Vehicles (e.g., gasoline vehicles) emit a variety of harmful contaminants during use, such as solid aerosols, carbon monoxide (CO), hydrocarbons (HC), nitrogen oxides (NOx), and the like. As the number of vehicles continues to increase, the problem of atmospheric pollution is becoming more and more serious. In order to reduce the environmental impact of vehicle emissions, national regulations require vehicles to be calibrated by professional agencies before the market or during use. For example, during the vehicle development process, in order to ensure the detection of the actual emission of a vehicle, it is usually required to perform an engine emission test calibration on the engine rig, for example, which is detailed in Section 1065 of the US Environmental Protection Agency's Federal Regulation CFR 3-40. However, since a method adopted in the engine emission test does not accurately represent the environmental condition of an actual road running of the vehicle, there may be cases where the engine emission test is qualified and the vehicle emission test is unqualified. As a result, many countries have gradually increased the regulations for vehicle emissions test. For example, the US Environmental Protection Agency updated the federal regulations CFR 3-40 with the addition of Section 1066, which addresses the requirements for vehicle emissions test.

During vehicle emission testing, it is usually necessary to use a dilution tunnel to dilute an original exhaust gas, and aqueous condensation should be eliminated in the dilution tunnel to improve the detection accuracy. However, in the case where the external environment and the dilution air are varied and uncontrollable, it is difficult to prevent the generation of aqueous condensation in the dilution tunnel, and the aqueous condensation will dissolve the exhaust gas or carry away particles, which interferes with the accurate measurement of the contaminants. It is known that the probability of generating aqueous condensation in the dilution tunnel can be generally reduced by means of insulating or heating the entire dilution tunnel. However, these solutions cannot confirm whether there is aqueous condensation in the dilution tunnel during testing, and the accuracy of detection results cannot be guaranteed and the cost is high.

In addition, current vehicle emission laboratories have not yet had a good engineering design to modify the dilution tunnel, and cannot meet the requirements of the latest regulations on aqueous condensation monitoring. Therefore, in order to provide conditions for vehicle emission test that meet the relevant regulatory requirements, it is necessary to solve the problem of monitoring and controlling aqueous condensation in the dilution tunnel in the vehicle emission test system.

US2016/0209300 discloses an exhaust sampling system including a plurality of exhaust sampling system zones. The zones are, at least, a sampling conduit, a fill circuit, and a read circuit. A controller is programmed to predict a minimum dilution ratio to avoid condensation in one of the exhaust sampling system zones.

US2015/030830 describes a particle measure device comprising a number of sample gas measure devices and a temperature sensor which is arranged upstream of the particle measuring device and which detects the temperature of the sample gas, and a control unit for comparing the detected temperature with a limit value.

US 5,968,452 describes a system provided in an exhaust emission sampling system for controlling a flow controller in order to compensate for the effects of changing water vapor content in a diluted sample having a predetermined dilution ratio.

WO 02/071030 discloses an apparatus for testing particulate and gaseous exhaust emissions, including a sampling means, a mixing means, a gas testing means and a particulate testing means.

CN 107 870 222 A provides a method and a system for comparing consistency of PEMS (portable emissions measurement system) devices of a motor vehicle.

US 2013/312489 A1 provides an exhaust gas analyzing system having a function of navigating an adjusting procedure of a gas analyzer, and the system includes an analyzer for analyzing exhaust gas and a manager for managing and controlling the analyzer.

## SUMMARY

An object of the present invention is to provide a dilution tunnel internal aqueous condensation monitoring device and a vehicle emission test system to accurately monitor the moisture condition in the dilution tunnel during a vehicle emission test to avoid or minimize aqueous condensation in the dilution tunnel.

The object is achieved by a vehicle emission test system comprising a dilution tunnel according to claim 1.

Optionally, the dilution tunnel internal aqueous condensation monitoring device includes a second temperature sensor positioned at the inlet end of the dilution tunnel to measure a temperature of the diluted exhaust gas entering the dilution tunnel.

Optionally, the dilution tunnel comprises a first tunnel segment and a second tunnel segment arranged in series, and a particulate sampling device is arranged between the first tunnel segment and the second tunnel segment.

Optionally, the dilution tunnel internal aqueous condensation monitoring device further includes a third temperature sensor positioned adjacent to an inlet end of the particulate sampling device and a fourth temperature sensor positioned adjacent to an outlet end of the particulate sampling device.

Optionally, an insulating material is affixed to the exterior of the first tunnel segment and/or the second tunnel segment.

The vehicle emission test system of the present invention monitors aqueous condensation in the dilution tunnel through the temperature sensor and the humidity sensor, and control the temperature in the dilution tunnel by adjusting the temperature of the supplied air, which can be adapted to the modification and upgrade of dilution systems in many emission laboratories to meet regulatory requirements for vehicle emissions test. In addition, the present invention can collect signals such as temperature and humidity into the control device for ease of operation and calculation.

## BRIEF DESCRIPTION OF DRAWINGS

The features and advantages of the present invention will be apparent to those skilled in the art from the following description in conjunction with accompanying drawings. In the drawings,

> Fig. 1 shows a schematic diagram of a vehicle emission test system in accordance with an embodiment of the present invention, wherein a dilution tunnel and a dilution tunnel internal aqueous condensation monitoring device and an air supply device are schematically illustrated in dashed lines; and
> Fig. 2 shows a schematic flow chart of a monitoring and controlling method for aqueous condensation in a dilution tunnel of the vehicle emission test system shown in Fig. 1.

## DETAILED DESCRIPTION

A vehicle emission test system and a dilution tunnel internal aqueous condensation monitoring device thereof will be described in detail below with reference to the accompanying drawings. Those skilled in the art will appreciate that these exemplary embodiments are not meant to be limiting of the invention.

It should be noted that "inlet end", "outlet end", "upstream" and "downstream" as used herein are defined along the flow path of air or exhaust gas from a source until it is discharged from a pipeline. "Aqueous condensation" as used herein means the precipitation of water-containing constituents from a gas phase to a liquid phase.

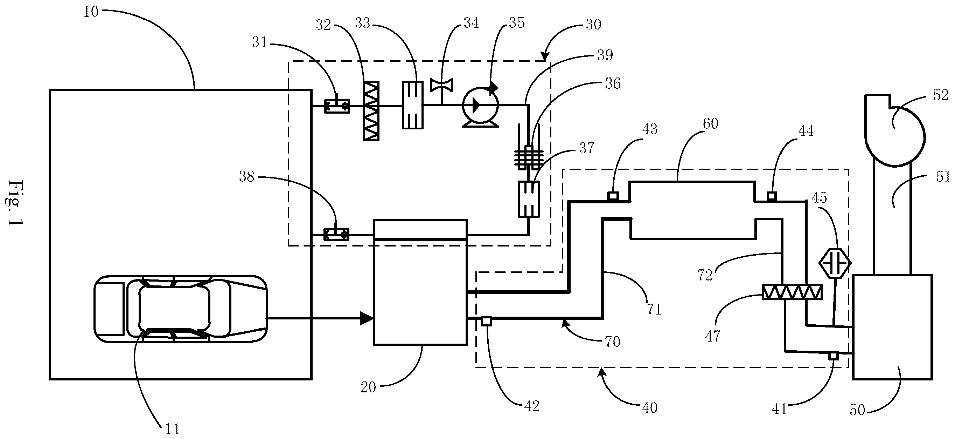

As shown in FIG. 1, the vehicle emission test system of the present invention generally includes an environmental simulation chamber 10, a mixing device 20, an air supply device 30, a dilution tunnel 70, a dilution tunnel internal aqueous condensation monitoring device 40, and an exhaust gas sampling device 50. The various parts are described in further detail below with reference to the accompanying drawings.

The environmental simulation chamber 10 is used to receive the vehicle 11 to be tested and is typically in a constant temperature, constant pressure state. The environmental simulation chamber 10 can simulate different environmental conditions of different driving states of the vehicle 11 on the road. In addition, a drum test stand (not shown) may be provided in the environmental simulation chamber 10. The vehicle 11 can also simulate various driving conditions within the environmental simulation chamber 10.

The mixing device 20 is configured to receive the exhaust gas of the vehicle 11 and air, mix the exhaust gas with air so the mixture is diluted, and deliver the diluted exhaust gas to the dilution tunnel 70. The related art that the exhaust gas is diluted by means of mixing with air is known to those of skill in the art, and will not be described in detail herein.

The air received by the mixing device 20 is from the air supply device 30 (shown in dashed lines in Fig. 1) that is accordingly configured to supply the heated clean air to the mixing device 20. The air supply device 30 includes an air supply conduit 39 having an inlet end and an outlet end. A first three-way valve 31 and a second three-way valve 38 are respectively positioned at the inlet end and the outlet end of the air supply conduit 39, wherein the first three-way valve 31 is configured to selectively communicate with the environmental simulation chamber 10 or the outside atmosphere, and the second three-way valve 38 is also configured to selectively communicate with the environmental simulation chamber 10 or the outside atmosphere. The purpose of the first three-way valve 31 and the second three-way valve 38 is to select different air sources depending on the environmental conditions simulated in the environment simulation chamber 10. For example, when the environmental simulation chamber 10 simulates a low temperature environment, the first three-way valve 31 can be switched to communicate with the outside atmosphere, then the air entering the air supply conduit 39 of the air supply device 30 is at a higher temperature, and at the outlet end of the air supply conduit 39, the temperature of the excess air that is not mixed with the exhaust gas is still high, so that the second three-way valve can be switched to communicate with the outside atmosphere to avoid discharging the excess air with a higher temperature into the environmental simulation chamber 10. Conversely, when the environmental simulation chamber 10 simulates a high temperature environment, the first three-way valve 31 and the second three-way valve 38 can be switched to be in communication with the environmental simulation chamber 10. Thus, by providing the first three-way valve 31 and the second three-way valve 38, the time for heating air can be shortened and the cost and testing time can be reduced. An opening communicating with the mixing device 20 is provided between the inlet end and the outlet end of the air supply conduit 39 to allow air to enter the mixing device 20 to mix with the exhaust gas. In addition, in order to avoid an excessive temperature change after the exhaust gas is mixed with air and to control the temperature in the downstream dilution tunnel 70, a heater 36 may be provided upstream of the opening of the air supply conduit 39 to heat air.

Additionally, to increase the cleanliness of air, one or more air filters 32 may be provided in the air supply conduit 39. Muffler 33, 37, a flow meter 34, and a first blower 35 may also be positioned in the air supply conduit 39. The first blower 35 is configured to adjust a flow rate of the supplied air according to a flow rate of the exhaust gas emitted by the vehicle to provide a constant dilution ratio within the mixing device 20 to achieve a proportional dilution.

The dilution tunnel 70 has an inlet end that is configured to communicate with the mixing device 20 to receive the diluted exhaust gas, and an outlet end that is configured to deliver the diluted exhaust gas to the exhaust gas sampling device 50. Various detection devices can be installed in the dilution tunnel 46 during the vehicle emission test.

The dilution tunnel internal aqueous condensation monitoring device 40 includes a first temperature sensor 41 positioned at the outlet end of the dilution tunnel 70 to measure the temperature $T_1$ of the diluted exhaust gas entering the exhaust gas sampling device 50. Additionally, the dilution tunnel internal aqueous condensation monitoring device 40 further includes a humidity sensor 45 that is also positioned at the outlet end of the dilution tunnel 70 to measure the humidity within the dilution tunnel 70, such as a relative humidity RH or an absolute humidity. The temperature T1 measured by the first temperature sensor 41 and the humidity measured by the humidity sensor 45 may be transmitted to a computing device (not shown) which may calculate a dew point temperature $T_d$ of the moisture within the dilution tunnel 70 based on the temperature $T_1$ and the humidity. The computing device can be a separate device or a module integrated into a control device of the vehicle emissions test system. The monitoring process for the dilution tunnel internal aqueous condensation monitoring device 40 will be described in further detail later.

The dilution tunnel internal aqueous condensation monitoring device 40 may further include a second temperature sensor 42 positioned at the inlet end of the dilution tunnel 70 to measure a temperature $T_2$ of the diluted exhaust gas entering the dilution tunnel 70 immediately after the mixing device 20. By comparing the temperatures $T_1$ and $T_2$, it is possible to monitor the temperature change of the diluted exhaust gas in the dilution tunnel 70.

The dilution tunnel 70 may include a first tunnel segment 71 for receiving the diluted exhaust gas and a second tunnel segment 72 for discharging the diluted exhaust gas arranged in series, and a particulate sampling device 60 may be positioned between the first tunnel segment 71 and the second tunnel segment 72. The particulate sampling device 60 can sample particulate matter in the diluted exhaust gas. In addition, the dilution tunnel internal aqueous condensation monitoring device 40 may further include a third temperature sensor 43 and a fourth temperature sensor 44, wherein the third temperature sensor 43 is positioned adjacent to an inlet end of the particulate sampling device 60, and the fourth temperature sensor is positioned adjacent to an outlet end of the particulate sampling device 60. The temperature change across the particulate matter sampling device 60 can be monitored at any time by providing the third temperature sensor 43 and the fourth temperature sensor 44.

In order to ensure the temperature in the dilution tunnel 70, an insulating material may be provided outside the dilution tunnel 70, for example, an insulating material is affixed to the exterior of the first tunnel segment 71 and/or the second tunnel segment 72. Specifically, if the air temperature is increased to a high temperature, the insulating material may be affixed to the first tunnel segment 71 or the second tunnel segment 72, or there does not require the insulating material at all. Otherwise, it is preferred that both the first and second tunnel segments are insulated from the ambient. In addition, in order to further improve a filtering effect, an exhaust gas filter 47 may also be provided in the second tunnel segment 72.

The exhaust gas sampling device 50 receives the diluted exhaust gas from the dilution tunnel 70 and samples the diluted exhaust gas, for example, by means of a volumetric pump or a critical venturi for constant volume sampling. Downstream of the exhaust gas sampling device 50, a negative pressure blower 52 connected through a conduit 51 may also be provided to provide a negative pressure required for constant volume sampling.

In addition, the vehicle emission test system further includes a control device (not shown) configured to control the operation of (e.g., a heater 36 of) the air supply device 30 based on the dew point temperature $T_d$ calculated by the dilution tunnel internal aqueous condensation monitoring device 40.

All of the configurations of the vehicle emission test system disclosed and claimed herein can be made without undue experimentation according to the present disclosure. While the preferred configurations have been described, it will be apparent to those of skill in the art that variations may be applied to the system and in the steps or in the sequence of steps described herein without departing from the scope of the invention.

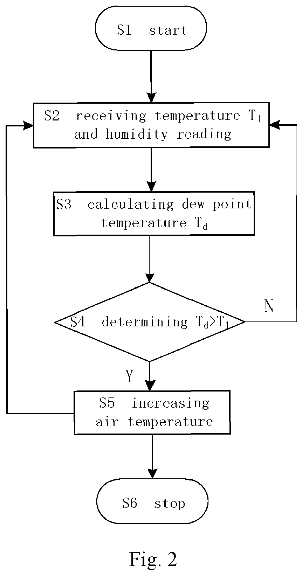

A monitoring and controlling method, not part of the present invention, for aqueous condensation in a dilution tunnel of the present invention will be described below with reference to Fig. 2, wherein an outlet end of the dilution tunnel is provided with a first temperature sensor and a humidity sensor. The method generally includes the following steps.

At step S1, the vehicle emissions test system is activated.

At step S2, a temperature $T_1$ from the first temperature sensor 41 and a humidity reading from the humidity sensor 45 are received.

At step S3, a dew point temperature $T_d$ of moisture in the dilution tunnel 70 is calculated. In the case where the temperature $T_1$ and the humidity are known, the dew point temperature $T_d$ can be calculated by the following method. The calculation method of the dew point temperature is further explained by taking the relative humidity RH as an example.

First, the relative humidity RH can be expressed by the following formula:

$$RH = \frac{P_w}{P_{ws}} \cdot 100\% \qquad (1)$$

where $P_w$ represents a vapor pressure and $P_{ws}$ represents a saturated vapor pressure. It should be understood that the relative humidity RH is temperature dependent.

In addition, the saturated vapor pressure $P_{ws}$ can be expressed by the following formula:

$$P_{ws} = A \cdot 10^{\left(\frac{mT}{T+T_n}\right)} \qquad (2)$$

where T represents a current temperature, A, m and $T_n$ are constants, for example, A= 6.089613, m = 7.33052, $T_n$ = 230.3921.

The dew point temperature $T_d$ can be expressed by the following formula:

$$T_d = \frac{T_n}{\left[\frac{m}{10log\left(\frac{P_w}{A}\right)} - 1\right]} \qquad (3)$$

It should be understood that the conversion between the relative humidity and the absolute humidity is known and will not be further described herein. In addition, for the dew point temperature calculated by the humidity and the temperature, other known calculation methods can also be employed.

At step S4, it is determined whether or not the calculated dew point temperature $T_d$ is greater than the temperature $T_1$ measured by the first temperature sensor 41. If the calculated dew point temperature $T_d$ is greater than the first temperature $T_1$, that is, the determination result is "Y", performing next step S5. Conversely, if the calculated dew point temperature $T_d$ is less than the first temperature $T_1$, that is, the determination result is "N", returning to step S2.

At step S5, a temperature of the supplied air is raised, for example, the power of the heater 36 of the air supply device 30 is increased for a certain period of time, and then returning to step S2.

At step S6, the operation of the vehicle emission test system is stopped.

Further, during the step S5, it is confirmed by tests that the air for dilution is heated to 40 ± 5 Celsius degrees to obtain a better effect. However, depending on the amount of discharge, the size of the dilution tunnel, and the like, the temperature of air may vary accordingly.

It should be understood that other steps for vehicle emission test may be included in the above method, such as a constant volume sampling step, a particulate sampling step, and the like.

The vehicle emission test system and the dilution tunnel internal aqueous condensation monitoring device of the present invention have the following advantages: having increased versatility, flexibility and speed to adapt to modification and upgrading of many dilution systems in existing emission laboratories to meet new regulatory requirements; ease of monitoring, controlling, and adjusting the temperature of the heater to control the temperature in the dilution tunnel, and monitoring the aqueous condensation in the dilution tunnel by the temperature sensor and the humidity sensor; easy to use and the relevant temperature and humidity signals can be integrated into the control device of the system so as to operate and calculate the dew point temperature of moisture in the dilution tunnel easily.

The invention has been described in detail above with reference to the specific embodiments. It is apparent that the above description and embodiments shown in the drawings are intended to be illustrative and not restrictive. It is apparent to those skilled in the art that various changes and modifications may be made without departing from the scope of the invention.

**Claims**

1. A vehicle emission test system including:

an environmental simulation chamber (10) for receiving a vehicle (11) to be tested and configured to simulate different environmental conditions of different driving states of the vehicle on the road;
a mixing device (20) configured to receive and mix air and exhaust gas of the vehicle (11);
an air supply device (30) configured to supply heated air to the mixing device (20);
a dilution tunnel (70) having an inlet end configured to receive diluted exhaust gas and an outlet end configured to output the diluted exhaust gas;
a dilution tunnel internal aqueous condensation monitoring device (40) configured to calculate a dew point temperature ($T_d$) of moisture in the dilution tunnel (70) and comprising a first temperature sensor (41) positioned at the outlet end of the dilution tunnel (70), a humidity sensor (45) positioned at the outlet end of the dilution tunnel (70), and a computing device configured to receive a temperature (T1) from the first temperature sensor (41) and a humidity reading from the humidity sensor (45) and calculate the dew point temperature ($T_d$) of moisture in the dilution tunnel (70);
an exhaust gas sampling device (50) being in communication with the outlet end of the dilution tunnel (70); and
a control device configured to control the operation of the air supply device (30) based on the dew point temperature ($T_d$);
**characterized in that** the air supply device (30) comprises:

an air supply conduit (39) having an inlet end and an outlet end and provided with a heater (36) upstream of an opening of the air supply conduit (39);
a first three-way valve (31) positioned at the inlet end of the air supply conduit (39), and configured to selectively communicate with the environmental simulation chamber (10) or the outside atmosphere; and
a second three-way valve (38) positioned at the outlet end of the air supply conduit (39) and configured to selectively communicate with the environmental simulation chamber (10) or the outside atmosphere; wherein when the environmental simulation chamber (10) simulates a low temperature environment, the control device controls the first three-way valve (31) and the second three-way valve (38) to be in communication with the outside atmosphere such that the air entering the air supply conduit (39) is at a higher temperature, and the air with a higher temperature is avoided from being discharged into the environmental simulation chamber (10); and when the environmental simulation chamber (10) simulates a high temperature environment, the control device controls the first three-way valve (31) and the second three-way valve (38) to be in communication with the environmental simulation chamber (10).

2. The vehicle emission test system according to claim 1, wherein the air supply conduit (39) is provided with an opening in communication with the mixing device (20) between the inlet end and the outlet end of the air supply conduit.

3. The vehicle emission test system according to claim 2, wherein the air supply device (30) comprises a first blower (35) configured to determine a flow rate of the supplied air depending on a flow rate of the exhaust gas of the vehicle (11).

4. The vehicle emission test system according to claim 1, wherein the exhaust gas sampling device (50) is in communication with a second blower (52), and the second blower (52) provides a negative pressure for the exhaust gas sampling device (50).

5. The vehicle emission test system according to claim 1, wherein the dilution tunnel internal aqueous condensation monitoring device (40) further comprises a second temperature sensor (42) positioned at the inlet end of the dilution tunnel (70) to measure a temperature of the diluted exhaust gas entering the dilution tunnel (70).

6. The vehicle emission test system according to claim 5, wherein the dilution tunnel (70) comprises a first tunnel segment (71) and a second tunnel segment (72) arranged in series, and a particulate sampling device (60) is positioned between the first tunnel segment (71) and the second tunnel segment (72).

7. The vehicle emission test system according to claim 6, wherein the dilution tunnel internal aqueous condensation monitoring device (40) further comprises a third temperature sensor (43) and a fourth temperature sensor (44), wherein the third temperature sensor (43) is positioned adjacent to an inlet end of the particulate sampling device (60), and the fourth temperature sensor (44) is positioned adjacent to an outlet end of the particulate sampling device (60).

8. The vehicle emission test system according to claim 6, wherein an insulating material is affixed to the exterior of the first tunnel segment (71) and/or the second tunnel segment (72).

**Patentansprüche**

1. Fahrzeugemissionstest-System, umfassend:

eine Umweltsimulationskammer (10) zum Aufnehmen eines zu testenden Fahrzeugs (11), die dazu ausgestaltet ist, unterschiedliche Umweltbedingungen unterschiedlicher Fahrzustände des Fahrzeugs auf der Straße zu simulieren;
eine Mischvorrichtung (20), die dazu ausgestaltet ist, Luft und Abgas des Fahrzeugs (11) zu empfangen und zu mischen;
eine Luftzuführvorrichtung (30), die dazu ausgestaltet ist, der Mischvorrichtung (20) erwärmte Luft zuzuführen;
einen Verdünnungstunnel (70) mit einem Einlass-Ende, das dazu ausgestaltet ist, verdünntes Abgas zu empfangen, und einem Auslass-Ende, das dazu ausgestaltet ist, das verdünnte Abgas auszugeben;

eine Vorrichtung zur Überwachung der Kondenswasserbildung im Inneren eines Verdünnungstunnels (40), die dazu ausgestaltet ist, eine Taupunkttemperatur ($T_d$) von Feuchtigkeit in dem Verdünnungstunnel (70) zu berechnen, und einen ersten Temperatursensor (41), der an dem Auslass-Ende des Verdünnungstunnels (70) angeordnet ist, einen Feuchtesensor (45), der an dem Auslass-Ende des Verdünnungstunnels (70) angeordnet ist,

und eine Rechenvorrichtung, die dazu ausgestaltet ist, eine Temperatur (T1) von dem ersten Temperatursensor (41) und einen Feuchtemesswert von dem Feuchtesensor (45) zu empfangen und die Taupunkttemperatur ($T_d$) von Feuchtigkeit in dem Verdünnungstunnel (70) zu berechnen, umfasst,

eine Abgas-Probenahmevorrichtung (50), die mit dem Auslass-Ende des Verdünnungstunnels (70) in Verbindung steht; und

eine Steuervorrichtung, die dazu ausgestaltet ist, basierend auf der Taupunkttemperatur ($T_d$) den Betrieb der Luftzuführvorrichtung (30) zu steuern;

**dadurch gekennzeichnet, dass** die Luftzuführvorrichtung (30) Folgendes umfasst:

eine Luftzuführleitung (39), die ein Einlass-Ende und ein Auslass-Ende aufweist und stromaufwärts einer Öffnung der Luftzuführleitung (39) mit einer Heizeinrichtung (36) versehen ist;

ein erstes Dreiwegeventil (31), das an dem Einlass-Ende der Luftzuführleitung (39) angeordnet und dazu ausgestaltet ist, selektiv mit der Umweltsimulationskammer (10) oder der Umgebungsatmosphäre in Verbindung zu stehen; und

ein zweites Dreiwegeventil (38), das an dem Auslass-Ende der Luftzuführleitung (39) angeordnet und dazu ausgestaltet ist, selektiv mit der Umweltsimulationskammer (10) oder der Umgebungsatmosphäre in Verbindung zu stehen;

wobei, wenn die Umweltsimulationskammer (10) eine Umgebung mit niedriger Temperatur simuliert, die Steuervorrichtung das erste Dreiwegeventil (31) und das zweite Dreiwegeventil (38) so steuert, dass sie mit der Umgebungsatmosphäre in Verbindung stehen, sodass die Luft, die in die Luftzuführleitung (39) einströmt, eine höhere Temperatur aufweist, und verhindert wird, dass die Luft mit einer höheren Temperatur in die Umweltsimulationskammer (10) abgegeben wird; und, wenn die Umweltsimulationskammer (10) eine Umgebung mit hoher Temperatur simuliert, die Steuervorrichtung das erste Dreiwegeventil (31) und das zweite Dreiwegeventil (38) so steuert, dass sie mit der Umweltsimulationskammer (10) in Verbindung stehen.

2. Fahrzeugemissionstest-System nach Anspruch 1, wobei die Luftzuführleitung (39) zwischen dem Einlass-Ende und dem Auslass-Ende der Luftzuführleitung mit einer Öffnung versehen ist, die mit der Mischvorrichtung (20) in Verbindung steht.

3. Fahrzeugemissionstest-System nach Anspruch 2, wobei die Luftzuführvorrichtung (30) ein erstes Gebläse (35) umfasst, das dazu ausgestaltet ist, in Abhängigkeit von einer Durchflussmenge des Abgases des Fahrzeugs (11) eine Durchflussmenge der zugeführten Luft zu bestimmen.

4. Fahrzeugemissionstest-System nach Anspruch 1, wobei die Abgas-Probenahmevorrichtung (50) mit einem zweiten Gebläse (52) in Verbindung steht und das zweite Gebläse (52) einen Unterdruck für die Abgas-Probenahmevorrichtung (50) bereitstellt.

5. Fahrzeugemissionstest-System nach Anspruch 1, wobei die Vorrichtung zur Überwachung der Kondenswasserbildung im Inneren eines Verdünnungstunnels (40) ferner einen zweiten Temperatursensor (42) umfasst, der an dem Einlass-Ende des Verdünnungstunnels (70) angeordnet ist, um eine Temperatur des verdünnten Abgases, das in den Verdünnungstunnel (70) einströmt, zu messen.

6. Fahrzeugemissionstest-System nach Anspruch 5, wobei der Verdünnungstunnel (70) einen ersten Tunnelabschnitt (71) und einen zweiten Tunnelabschnitt (72), die in Reihe angeordnet sind, umfasst und zwischen dem ersten Tunnelabschnitt (71) und dem zweiten Tunnelabschnitt (72) eine Partikel-Probenahmevorrichtung (60) angeordnet ist.

7. Fahrzeugemissionstest-System nach Anspruch 6, wobei die Vorrichtung zur Überwachung der Kondenswasserbildung im Inneren eines Verdünnungstunnels (40) ferner einen dritten Temperatursensor (43) und einen vierten Temperatursensor (44) umfasst, wobei der dritte Temperatursensor (43) einem Einlass-Ende der Partikel-Probenahmevorrichtung (60) benachbart angeordnet ist und der vierte Temperatursensor (44) einem Auslass-Ende der Partikel-Probenahmevorrichtung (60) benachbart angeordnet ist.

8. Fahrzeugemissionstest-System nach Anspruch 6, wobei ein Isoliermaterial an der Außenseite des ersten Tunnelabschnitts (71) und/oder des zweiten Tunnelabschnitts (72) angebracht ist.

**Revendications**

1. Système de test d'émission de véhicule incluant :

    une chambre de simulation environnementale (10) pour recevoir un véhicule (11) à tester et configurée pour simuler différentes conditions environnementales de différents états de conduite du véhicule sur la route ;
    un dispositif de mélange (20) configuré pour recevoir et mélanger de l'air et des gaz d'échappement du véhicule (11) ;
    un dispositif d'alimentation en air (30) configuré pour alimenter le dispositif de mélange (20) en air chauffé ;
    un tunnel de dilution (70) ayant une extrémité d'entrée configurée pour recevoir un gaz d'échappement dilué et une extrémité de sortie configurée pour délivrer le gaz d'échappement dilué ;
    un dispositif de surveillance de condensation aqueuse interne de tunnel de dilution (40) configuré pour calculer une température de point de rosée (Td) de buée dans le tunnel de dilution (70) et comprenant un premier capteur de température (41) positionné à l'extrémité de sortie du tunnel de dilution (70), un capteur d'humidité (45) positionné à l'extrémité de sortie du tunnel de dilution (70), et un dispositif informatique configuré pour recevoir une température (T1) provenant du premier capteur de température (41) et un relevé d'humidité provenant du capteur d'humidité (45) et calculer la température de point de rosée (Td) de buée dans le tunnel de dilution (70) ;
    un dispositif d'échantillonnage de gaz d'échappement (50) étant en communication avec l'extrémité de sortie du tunnel de dilution (70) ; et
    un dispositif de commande configuré pour commander le fonctionnement du dispositif d'alimentation en air (30) sur la base de la température de point de rosée (Td) ;
    **caractérisé en ce que** le dispositif d'alimentation en air (30) comprend :

        un conduit d'alimentation en air (39) ayant une extrémité d'entrée et une extrémité de sortie et pourvu d'un dispositif de chauffage (36) en amont d'une ouverture du conduit d'alimentation en air (39) ;
        une première soupape à trois voies (31) positionnée à l'extrémité d'entrée du conduit d'alimentation en air (39), et configurée pour communiquer sélectivement avec la chambre de simulation environnementale (10) ou l'atmosphère extérieure ; et
        une deuxième soupape à trois voies (38) positionnée à l'extrémité de sortie du conduit d'alimentation en air (39) et configurée pour communiquer sélectivement avec la chambre de simulation environnementale (10) ou l'atmosphère extérieure ;
    dans lequel lorsque la chambre de simulation environnementale (10) simule un environnement à basse température, le dispositif de commande commande la première soupape à trois voies (31) et la deuxième soupape à trois voies (38) pour qu'elles soient en communication avec l'atmosphère extérieure de telle sorte que l'air entrant dans la conduite d'alimentation en air (39) soit à une température plus élevée, et à éviter que l'air ayant une température plus élevée soit évacué dans la chambre de simulation environnementale (10) ; et lorsque la chambre de simulation environnementale (10) simule un environnement à haute température, le dispositif de commande commande la première soupape à trois voies (31) et la deuxième soupape à trois voies (38) pour qu'elles soient en communication avec la chambre de simulation environnementale (10).

2. Système de test d'émission de véhicule selon la revendication 1, dans lequel le conduit d'alimentation en air (39) est pourvu d'une ouverture en communication avec le dispositif de mélange (20) entre l'extrémité d'entrée et l'extrémité de sortie du conduit d'alimentation en air.

3. Système de test d'émission de véhicule selon la revendication 2, dans lequel le dispositif d'alimentation en air (30) comprend une première soufflante (35) configurée pour déterminer un débit de l'air fourni en fonction d'un débit du gaz d'échappement du véhicule (11).

4. Système de test d'émission de véhicule selon la revendication 1, dans lequel le dispositif d'échantillonnage de gaz d'échappement (50) est en communication avec une deuxième soufflante (52), et la deuxième soufflante (52) fournit une pression négative pour le dispositif d'échantillonnage de gaz d'échappement (50).

5. Système de test d'émission de véhicule selon la revendication 1, dans lequel le dispositif de surveillance de condensation aqueuse interne de tunnel de dilution (40) comprend en outre un deuxième capteur de température (42) positionné à l'extrémité d'entrée du tunnel de dilution (70) pour mesurer une température du gaz d'échappement dilué entrant dans le tunnel de dilution (70).

6. Système de test d'émission de véhicule selon la revendication 5, dans lequel le tunnel de dilution (70) comprend un premier segment de tunnel (71) et un deuxième segment de tunnel (72) agencés en série, et un dispositif d'échantillonnage de particules (60) est positionné entre le premier segment de tunnel (71) et le deuxième segment de tunnel (72).

7. Système de test d'émission de véhicule selon la revendication 6, dans lequel le dispositif de surveillance de condensation aqueuse interne de tunnel de dilution (40) comprend en outre un troisième capteur de température (43) et un quatrième capteur de température (44), le troisième capteur de température (43) étant positionné adjacent à une extrémité d'entrée du dispositif d'échantillonnage de particules (60), et le quatrième capteur de température (44) étant positionné adjacent à une extrémité de sortie du dispositif d'échantillonnage de particules (60).

8. Système de test d'émission de véhicule selon la revendication 6, dans lequel un matériau isolant est fixé à l'extérieur du premier segment de tunnel (71) et/ou du deuxième segment de tunnel (72).

Fig. 1

S1 start

S2 receiving temperature $T_1$ and humidity reading

S3 calculating dew point temperature $T_d$

S4 determining $T_d > T_1$

N

Y

S5 increasing air temperature

S6 stop

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160209300 A
- US 2015030830 A
- US 5968452 A
- WO 02071030 A
- CN 107870222 A
- US 2013312489 A1